# EUROPEAN PATENT APPLICATION

(11) **EP 3 915 702 A1**
(43) Date of publication of application: **01.12.2021**
(21) Application number: 21176181.2
(22) Date of filing: 27.05.2021
(51) Int. Cl.: B22F 7/06, B22F 7/08, B22F 10/25, B33Y 10/00, C22C 29/08, C22C 32/00, B22F 10/34, B22F 5/00, B22F 7/00, B26D 1/00, B33Y 70/10, B33Y 80/00

(54) **ROTARY KNIFE**

(30) Priority: 29.05.2020 IT 202000012988
(71) Applicant: Proxicad S.r.l., 65129 Pescara (IT)
(72) Inventor: BONORA, Ettore, 65129 Pescara (IT); PILOTTI, Letizia, 65129 Pescara (IT)
(74) Representative: Marchitelli, Mauro

(57) **Abstract**

The aim of this invention is to teach how to make a rotary knife 10 for cutting web materials and the related production method. The rotary knife 10 comprises a body 11 and at least one blade 15 having a plurality of layers 151, 152, ..., 15(n-1), 15n in which it is possible to identify a first layer 151 and a last layer 15n and wherein the plurality of layers 151, 152, ..., 15(n-1), 15n has a tungsten carbide concentration increasing from the first layer 151 to the last layer 15n and/or a nickel concentration decreasing from the first layer 151 to the last layer 15n of the blade 15.

## Description

### FIELD OF APPLICATION

Embodiments of the present invention relate to a rotary knife for cutting web materials which can be advantageously used in various industrial sectors such as, but without limiting the scope of the invention, in the industry for the production of disposable hygienic - sanitary articles such as diapers for babies, articles for incontinence, sanitary towels, filtering masks, etc.

### STATE OF THE ART

Rotary knives for cutting web materials such as for example paper, non-wovens, fabrics, polyethylene films, metallic and/or plastic films and more complex web materials such as blanks of disposable absorbent hygienic articles obtained by laminating various web materials are well known in the art and well described for example in US 4,770,078 A and EP 0 781 631 A1.

As is known, rotary knives can make cuts with various profiles which, in turn, can be open or closed. Indeed, the knives can make straight cuts, as in the case of web segmentation operations, or they can make curved cuts to perform operations for shaping the web materials.

In order to be able to work properly, the rotary knives are inserted in appropriate units called cutting units, which are well known in the art and described for example in US 8,100,040 B2 "Rotary cutting Device" in the name of Aichele Werkzeuge GmbH of Crailsheim (Germany).

Generally, a cutting unit consists of a frame, mounted inside which there are a roller provided with one or more blades (the rotary knife or knife) and an opposing roller (or anvil roll) which normally has a smooth cylindrical surface. In order to perform the cutting of the web material, which is fed between the two rollers, the blade of the knife presses the web against the smooth cylindrical surface of the anvil roll.

In cutting units, particularly in those which must make shaped cuts, the knife is the most complex and difficult element to make and, therefore, is the most expensive.

Indeed, the rotary knife must have the blade made with a material which is capable of withstanding the stresses and wear of the cutting process so that it can make the greatest number of cuts possible. Moreover, the blade must be appropriately shaped to be able to implement the desired cutting profile.

Knives can be carried out with special steels, which are normally steels produced with powder metallurgy, or with tungsten carbide powder sintered materials, also called "hard metal knives".

Both types of knives are complex and expensive.

Added to that, once the blade of a knife is worn, and therefore is no longer capable of making a quality cut, it can be restored only for a limited number of times with a process known as cutting edge resharpening.

Indeed, in practice, it is not possible to resharpen a knife more than 3, maximum 4 times, because each resharpening corresponds to a reduction of the external diameter of the blade and since in the knives, especially in those intended to make shaped cuts, the blade cannot drop below a minimum diameter which is imposed by the length specifications of the product to be cut, after having performed the 3 - 4 resharpening the knife must be replaced with a new one.

As already mentioned, both types of knives are expensive, obviously a steel knife costs less than a corresponding one made of hard metal, but has a lifetime, expressed in numbers of cuts, which is more limited, therefore the economic impact for each cut is similar for the two technologies and it is easy to understand how high is the economic loss when it becomes obligatory to throw away a cutting tool because it can no longer be restored.

Until now, all attempts to restore the external diameter of a knife blade to further extend its lifetime have not given any positive result.

Another issue present in the current technology for the production of knives is the fact that the whole tool must be made of high-strength material (special steel or tungsten carbide) even if it is only the blade which performs the cut and therefore only the blade should be made of high-strength material.

To mitigate this inconvenience, rotary knives have started to be made by assembling shells (or bushings) made of high-strength material on shaft made with less expensive steel, normally made of hardened steel. However, it is evident that it is only a small economic saving which does not solve all the other technical problems highlighted.

The fact that the whole tool has to be made of high-strength material, even if it is only a bushing, while mitigating the cost issue does not solve, for example, the problems linked to the thermal treatment of the steel. In fact, during the steps of hardening of the knife it is not possible to precisely manage thermal exchange speeds of the blade, because the blade is a thin element which comes out of the body of the bushing and, therefore, its metallurgical conversions cannot be properly controlled. This leads to have rotary knives whose quality is variable and cannot be determined beforehand, which makes their operating lifetime impossible to predict.

Regarding rotary hard metal knives, the technique of assembling a tungsten carbide bushing on a steel shaft is unavoidable from an economic point of view given the very high cost of the sintered material, but is very risky due to the considerable differences between the linear thermal expansion coefficients of the steel of the shaft and of the sintered tungsten carbide of the bushing and, because the coupling between the bushing and the shaft must be made with a certain degree of interference, that is, in other words, the outer diameter of the shaft must be greater than the diameter of the bushing bore. In order to be able to insert the bushing on the shaft it is necessary to vary the dimensions of at least one of the components using the thermal expansion coefficient of the material. In practice, the coupling is implemented by cooling the shaft and it is not uncommon for the bushings to break as soon as the shaft, returning to ambient temperature, tends to regain its original dimensions, partly due to the fragility of the sintered material.

In JP 2001198882 and in JP 2000190297, in an attempt to partly overcome the above-mentioned disadvantages, teachings have been supplied on how to make a rotary knife which has the cutting edge of the knife blade coated with particles of hard metal, such as tungsten carbide, mixed in a silicone or fluoride resin.

These solutions do not solve the above-mentioned problems, instead, in turn they add further disadvantages linked to the adherence between the basic structure of the steel blade and the resin matrix added on the upper end of the blade itself in which the tungsten carbide particles are embedded. Those problems are due to the differences in the values of the linear thermal expansion coefficients of the materials placed in close contact, which generate splintering of the resin matrix of the tungsten carbide coating, as well as its detachment from the blade.

In fact, experimental studies for analyzing the process of direct laser deposition of the tungsten carbide powder on a steel substrate have highlighted the considerable difficulties encountered in processing this type of powder; since the material deposited indeed has considerable hardness, but low ductility. In general, that resulted in a partial or total lack of adherence of the tungsten carbide deposit to the steel substrate.

Therefore, there is a need to improve and make available a cutting tool which overcomes at least the disadvantages of the prior art.

In order to overcome the drawbacks of the prior art and to achieve these and further purpose and advantages, the Applicant studied, tested and made the present invention.

### SUMMARY OF THE INVENTION

The present invention is expressed and characterized in the independent claims, while the dependent claims set out other characteristics of the present invention or variants of the idea of the main solution.

One purpose of the present invention is to provide the teachings necessary for making a cutting tool for web materials and the related production method capable of overcoming all the drawbacks associated with the prior art.

In accordance with possible embodiments of the present invention a rotary knife for cutting web materials comprises a body made of a first metallic material and at least one blade made of a second metallic material on which it is possible to identify a base and a crest, wherein the second metallic material of the blade is a sintered powdered material.

In accordance with possible embodiments of the present invention, the blade of the rotary knife may comprise a plurality of layers of the powdered material in which it is possible to identify a first layer comprising the base of the blade and a last layer comprising the crest (or cutting edge) of the blade, wherein the above-mentioned layers of powdered material with which the blade is made have a tungsten carbide concentration increasing from the first layer comprising the base of the blade to the last layer comprising the crest of the blade and/or a nickel concentration decreasing from the first layer comprising the base of the blade to the last layer comprising the crest of the blade.

Thanks to the fact that a blade is made with a plurality of layers comprising a sintered powdered material which have a tungsten carbide concentration that is variable and increasing from the base to the crest of the blade and/or a nickel concentration decreasing from the base to the crest of the blade of the knife it is possible to overcome the disadvantages listed in the prior art and thanks to the low tungsten carbide content and the high nickel content of the first layer comprising the base of the blade it is possible to obtain good levels of adherence between the first metallic material with which the body of the knife is made and the powdered material with which the first layer of the blade is made.

In fact, thanks to the ductility of the nickel the first layer which comprises the base of the crest successfully absorbs, deforming as it does, the tensions which arise due to the fact that materials which have differences in the values of the physical properties and in particular in the linear thermal expansion coefficients are put in close contact. Moreover, thanks to the fact that a blade is made with a crest carried out with a layer of powdered material with a high tungsten carbide concentration it is possible to obtain a knife which has a blade with a crest capable of withstanding the stresses and wear of the cutting process.

In one embodiment of the present invention, the powdered material of the last layer of the blade, comprising the crest, may have a tungsten carbide concentration higher than 80% by weight and/or a nickel concentration lower than 10% by weight.

In accordance with one possible embodiment of the present invention, the powdered material of the layer of the blade comprising the crest may have a tungsten carbide concentration higher than 85% by weight and/or a nickel concentration of 0%.

According to possible embodiments of the present invention, a powdered material suitable for making the layer of material comprising the crest of the blade may be a material comprising tungsten carbide and cobalt.

According to possible embodiments of this invention, a powdered material suitable for making the layer of material comprising the crest of the blade may be a material comprising tungsten, cobalt, and chromium.

Thanks to the fact that the blade is made with a plurality of layers of sintered powdered materials it is possible to make the first layer of the blade with a material which may comprise a tungsten carbide concentration lower than 10% by weight and/or a nickel concentration higher than 85% by weight.

According to possible embodiments of this invention, a powdered material suitable for making the first layer of the blade may comprise more than 90% by weight of nickel and/or a tungsten carbide concentration of 0%.

In accordance with possible embodiments of this invention, a powdered material suitable for making the first layer of material of the blade may comprise nickel, boron, carbon, chromium, iron, silicon, and aluminum.

Thanks to the high degree of ductility of the nickel, which allows absorption of the tensions generated in the joint during the step of joining the first layer of the blade to the metallic material of the shaft of the knife, as well as the tensions derived from the differences in the values of the linear thermal expansion coefficients it is possible to obtain optimum adherence between the metallic material of the shaft and the first layer of the blade of the knife.

According to possible embodiments of this invention, the body of a rotary knife for cutting web materials, on which at least one blade is made, may be a monolithic element.

According to possible embodiments of this invention, the body of a rotary knife for cutting web materials comprises a shaft on which at least one bushing having at least one blade is fitted.

Thanks to the possibility of being able to build a blade with a sintered powdered material directly on the body of the knife it is possible to use for the body either a monolithic element or an element formed by the coupling of a shaft with one or more bushings, since both the issues linked to the cost of the material of the body of the knife and/or of the bushing and the problems linked to the thermal treatment of the knife disappear.

According to possible embodiments of the present invention, the monolithic element or the bushing on which at least one blade is made may be stainless steel.

Thanks to the fact that the body of the knife can be made of stainless steel it is possible to avoid any surface treatment of the body of the knife against corrosion.

According to possible embodiments of this invention, powdered metallic materials suitable for making the layers which build the blade of the knife have a particle size of between 10 and 120 microns.

A further purpose of the present invention is to teach how to implement a production method for making a rotary knife for cutting web materials which is capable of overcoming all the drawbacks associated with the prior art.

According to possible embodiments of this invention, a method for making a rotary knife for cutting web materials comprising a body made of a first metallic material and at least one blade made of a second metallic material having a base and a crest wherein the second metallic material is a powdered material, the method comprises the steps of:
- supplying the body of the knife;
- generating a molten metal crucible on the body of the knife;
- feeding the powder of the second metallic material;
- melting the powder of the second metallic material; and
- solidifying the powder of the second metallic material in order to obtain a plurality of sintered metallic powder beads suitable for making a plurality of layers in order to build the blade of the knife, in which it is possible to identify a first layer comprising the base of the blade and a last layer comprising the crest of the blade of the knife;
in accordance with possible embodiments of this invention, the layers which build the knife have a tungsten carbide concentration increasing from the base of the blade to the crest of the blade of the knife and/or a nickel concentration decreasing from the base to the crest of the blade of the knife.

Thanks to the fact that the blade of the knife is made with a powdered material which has a tungsten carbide concentration increasing from the base to the crest of the blade and/or a nickel concentration decreasing from the base to the crest of the blade of the knife it is possible to obtain a knife which is more economical than those made in accordance with the prior art, indeed the body of the knife may be made of stainless steel or hardened steel and only the blade may be made of a high-strength powdered material and it is possible to overcome the problems linked to the thermal treatment of the knife.

In accordance with possible embodiments of this invention, the molten metal crucible may be made by means of a laser beam which has a focal diameter.

According to possible embodiments of this invention the molten metal crucible has a plan size of between 0.5 and 5 times the focal diameter of the laser beam.

According to possible embodiments of this invention the sintered metallic powder beads, suitable for making a plurality of layers in order to build the blade of the knife, may be produced by means of a process of direct deposition of the metallic powders.

In accordance with possible embodiments of the invention, the sintered metallic powder beads which are made in the step of solidifying the second metallic material each have a height and a width wherein the width is greater than or equal to 3 times the height.

According to possible embodiments of the present invention, the blade of the rotary knife may be made of a powdered metallic material with a particle size of between 10 and 120 microns.

According to possible embodiments of the present invention, the body of a rotary knife for cutting web materials on which at least one blade is made may be a monolithic element.

According to possible embodiments of the present invention, the body of a rotary knife for cutting web materials comprises a shaft on which is fitted at least one bushing having at least one blade.

Thanks to the possibility of being able to build a blade by depositing a powdered material directly on the body of the knife it is possible to use for the body of the knife either a monolithic element or an element formed by the coupling of a shaft with one or more bushings overcoming the problems due to the coupling with interference between shaft and knife bushing.

According to possible embodiments of this invention, the monolithic element or the bushing on which at least one blade is made may be stainless steel.

Thanks to the fact that the body of the knife can be made of stainless steel it is possible to avoid any surface treatment of the body of the knife against corrosion.

A further purpose of the present invention is providing the teachings necessary for implementing a method for restoring the external diameter of the worn blade of a rotary knife for cutting web materials.

According to possible embodiments of this invention, a method for restoring the worn blade of a rotary knife for cutting web materials comprising a body and at least one blade made of a metallic material comprises the steps of:
- supplying a worn knife;
- generating a molten metal crucible on the top of the worn blade;
- feeding the powder of the metallic material of the blade;
- melting the powder of the metallic material of the blade; and
- solidifying the powder of the metallic material of the blade in order to make at least one sintered metallic powder bead suitable for making at least one layer of material for restoring the external diameter of the blade of the knife.

Thanks to the fact that it is possible to deposit on the worn blade at least one sintered layer of the powder of the metallic material used to make the blade itself it is possible to overcome a further disadvantage of the prior art regarding the restoration of worn knives which could no longer be resharpened, since their diameter has now become too small after the 3 - 4 routine resharpenings, by reforming the diameter of the blade by reconstructing the worn layers and returning it to the original diameter.

A further advantage of the restoration method in accordance with the teachings of the present invention is that it may be implemented both in knives made in accordance with the teachings in this document, as well as on knives made with conventional technologies.

In accordance with possible embodiments of this invention, in the method for restoring the worn blade of a knife the molten metal crucible may be made by means of a laser beam which has a focal diameter.

According to possible embodiments of the present invention, in the method for restoring the worn blade of a knife the molten metal crucible has a plan size of between 0.5 and 5 times the focal diameter of the laser beam.

According to possible embodiments of this invention, the sintered metallic powder beads, suitable for making the layers for restoring the worn blade of the knife, may be produced by means of a process of direct deposition of the metallic powders.

In accordance with possible embodiments of the present invention, in the method for restoring the worn blade of a knife the sintered metallic powder beads which are made in the step of solidifying the second metallic material each have a height and a width wherein the width is greater than or equal to 3 times the height.

### ILLUSTRATION OF THE DRAWINGS

These and other characteristics of the present invention will become clear from the following description of embodiments, given as a non-limiting example, with reference to the attached drawings wherein:
- Figure 1 is a schematic view of a rotary knife according to one possible embodiment of the present invention;
- Figure 2 is a schematic view in cross-section along the axis X - X of the knife of Figure 1;
- Figure 3 is a detail of the blade and of part of the knife of the cross-section of Figure 1;
- Figure 4 is a schematic view of a process for making the blade of a rotary knife in accordance with this invention.

To facilitate understanding, identical reference numbers have been used, where possible, to identify identical common elements in the Figures. It should be understood that elements and characteristics of an embodiment can be conveniently incorporated in other embodiments without further specification.

### DESCRIPTION OF THE EMBODIMENTS

The following description illustrates various specific details intended to provide an in-depth understanding of the embodiments. The embodiments may be made without one or more of the specific details, or with other methods, components, materials, etc.

In other cases, known configurations, operations or materials are not shown or described in detail to avoid making the various aspects of the embodiments unclear.

The references to "one embodiment" and/or "embodiments" in the context of this description means that a particular configuration, structure or feature described with regard to the embodiment is included in at least one embodiment. Therefore, phases such as "in one embodiment" if present in different parts of this description do not necessarily refer to the same embodiment.

Moreover, particular shapes, structures or features may be combined in any appropriate way in one or more embodiments.

As already indicated in the description of the "State of the art" the rotary knives may be made in many ways:
- the knives may be monolithic, that is to say, they may be made by working a single block of high-strength steel;
- the knives may be made by fitting on a steel shaft (normally a hardened steel) one or more bushings made of higher-strength material on which the blades have been made and, if necessary, rings called barrier rings;
- the knives may be made by fitting on a shaft, in addition to the bushing (or bushings) on which the blades have been made, also a pair of disks which form the barrier rings.

In accordance with one embodiment of the present invention, and without thereby limiting the scope of the description, with reference to the accompanying figures, the following is a description of a rotary knife (or knife) 10, made by assembling on a shaft a bushing on which two blades and a pair of barrier rings have been built; it is obvious that rotary knives with differently shaped blades or with a different number of blades, or without the barrier rings, or with the barrier rings added as external disks, may in any case be covered by the scope of this invention.

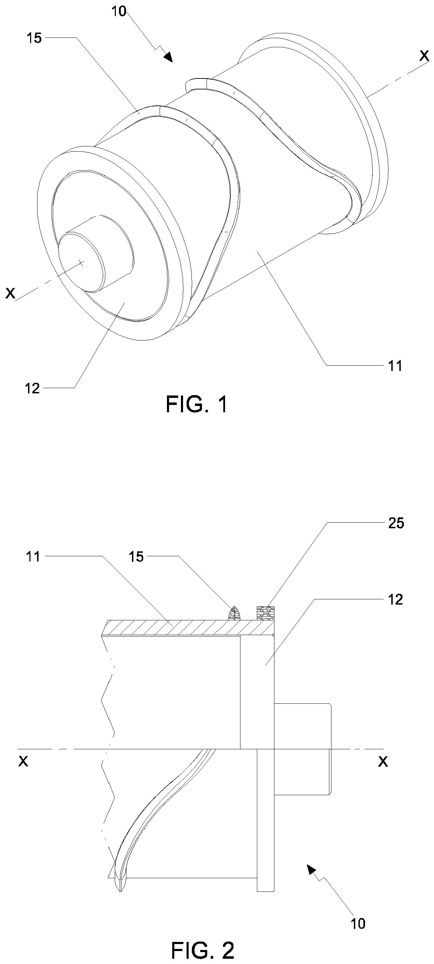

In accordance with possible embodiments of the present invention, the rotary knife 10 for cutting a web material illustrated in Figure 1 comprises a shaft 12, which has an axis of rotation X - X, on which at least one bushing 11 is fitted and on which at least one blade 15 is made.

According to possible embodiments of the present invention, the shaft 12 and the bushing 11 may be made with the same metallic material or they may be made with different metallic materials. Materials suitable for making the shaft 12 and the bushing 11 may be hardened steel or stainless steel.

In each blade 15 of the rotary knife 10 it is possible to identify a base 16 and a crest 14 connected to each other by two side surfaces 18.

The base 16 determines the interconnecting region between the blade 15 and the body 11 of the knife 10, whilst the crest 14 is the portion of blade 15 for making the cut in the web by pressing it against the surface of the counter-knife (or anvil roll).

Hereinafter, without limiting the scope of the description reference will be made to a powdered material meaning that it may be a single powdered material or a mixture of powdered materials.

In accordance with possible embodiments of this invention, the blade 15 of the knife 10 may be made with a powdered material which has a tungsten carbide concentration increasing from the base 16 to the crest 14 and/or a nickel concentration decreasing from the base 16 to the crest 14 of the blade 15.

In accordance with one embodiment of this invention, the tungsten carbide concentration increasing from the base 16 to the crest 14 of the blade 15 and/or the nickel concentration decreasing from the base 16 to the crest 14 of the blade 15 may be obtained with a plurality of layers 151, 152, ..., 15n-1, 15n in which the first layer 151, comprising the base 16 of the blade 15, may have the maximum nickel concentration and/or the minimum tungsten carbide concentration and the last layer 15n, comprising the crest 14 of the blade 15, may have the minimum nickel concentration and/or the maximum tungsten carbide concentration.

In accordance with possible embodiments of the present invention, the plurality of layers with which a decreasing nickel concentration and/or an increasing tungsten carbide concentration is obtained from the first layer comprising the base to the last layer comprising the crest may comprise only two layers, that is to say, the first layer 151 comprising the base 16 and the last layer 15n comprising the crest 14.

In accordance with one embodiment of this invention the plurality of layers with which a decreasing nickel concentration and/or an increasing tungsten carbide concentration is obtained from the first layer comprising the base to the last layer comprising the crest may comprise in addition to the first layer 151 comprising the base 16 and the last layer 15n comprising the crest 14 a single intermediate layer.

According to possible embodiments of the present invention, between the first layer 151 and the last layer 15n there may be multiple intermediate layers 152, ..., 15n-1 present.

According to possible embodiments of the present invention, in the first layer 151, comprising the base 16 of the blade 15, the tungsten carbide concentration may be lower than 10% by weight and/or the nickel concentration may be higher than 85% by weight.

In accordance with possible embodiments of the present invention, in the blade 15 the tungsten carbide concentration of the first layer 151, which comprises the base 16, may be 0%.

In accordance with possible embodiments of this invention, in the blade 15 the nickel concentration of the first layer 151, which comprises the base 16, may be higher than 90% by weight.

In accordance with possible embodiments of the present invention, in the last layer 15n, comprising the crest 14 of the blade 15, the tungsten carbide concentration may be higher than 80% by weight and/or the nickel concentration may be lower than 10% by weight.

In accordance with possible embodiments of this invention, the tungsten carbide concentration of the last layer 15n, which comprises the crest 14, may be higher than 85% by weight.

According to possible embodiments of the present invention, the nickel concentration of the last layer 15n, which comprises the crest 14, may be 0%.

Each layer 151, 152, 153, ..., 15n of powdered material of which the blade 15 of the knife 10 is composed may have a thickness of less than 5 mm.

The presence of the nickel and of the tungsten carbide in the layers used to build the blade 15 of the knife 10 allow the problems of the prior art to be overcome since the high tungsten carbide concentration in the last layer 15n of the blade 15 allows the crest 14 to withstand the tensions and the wear generated by the cutting process, whilst the higher nickel concentration in the first layer 151 of the blade 15 allows the obtainment of good levels of adherence between the blade 15 and the metallic material of the bushing 11 thanks to the fact that the material of the first layer 151 is provided with a high degree of ductility due to the presence of a high nickel concentration. Indeed, both materials, that of the bushing 11 and that of the first layer 151 of the blade 15, are subjected to great shrinkage tensions which are generated in the step of making the first layer 151, in addition to the tensions which arise due to the fact that materials which have inevitable differences in the values of their physical properties and in particular in the values of the linear thermal expansion coefficients are put in close contact and it is only thanks to the ductility of the nickel that it is possible to avoid breaks arising in the blade deriving from the above-mentioned stresses.

According to possible embodiments of the present invention, the rotary knife 10 may have two barrier rings 25 whose function is to manage the pressure which the crest 14 of the blade 15 of the knife 10 applies against the outer surface of the anvil roll during the cutting step. Moreover, in cases in which the cutting units have the anvil roll without mechanical transmission, the barrier rings 25 also have the task of driving the anvil roll.

For more information about the cutting units and their operation, refer to the extensive patent and technical literature available such as patent US 8,100,040 B2 "Rotary cutting Device" already mentioned.

In accordance with possible embodiments of the present invention, the barrier rings 25 of the rotary knife 10 may be made on the bushing 11.

In each barrier ring 25 of the rotary knife 10 it is possible to identify a base 26 and a stop surface 24 connected to each other by two side surfaces 28.

The base 26 of each barrier rings 25 determines the interconnecting region between the barrier rings 25 and the body 11 of the knife 10.

In the knife 10 the stop surface 24 is the region of the barrier rings 25 which is in contact with the cylindrical surface of the anvil roll to manage the pressure between the crest 14 of the blade 15 and the surface of the anvil roll itself.

In one embodiment of this invention, the metallic material with which the barrier rings 25 are made may be the same metallic material with which the blade 15 is made, therefore hereinafter, without limiting the scope of the description reference will be made to a powdered material meaning that it may be a single powdered material or a mixture of powdered materials.

The fact that the blade and the barrier rings of a knife are made with the same material is a choice that is not just preferred, but advisable because the materials of the blade and of the barrier rings, during the cutting process must have the same behaviors linked to their chemical - physical properties and/or features such as the thermal expansion coefficients.

In accordance with possible embodiments of this invention, the barrier rings 25 of the knife 10 may be made with a powdered material which has a tungsten carbide concentration increasing from the base 26 to the stop surface 24 and/or a nickel concentration decreasing from the base 26 to the stop surface 24.

According to possible embodiments of the present invention, the tungsten carbide concentration increasing from the base 26 to the stop surface 24 of the barrier rings 25 and/or the nickel concentration decreasing from the base 26 to the stop surface 24 of the barrier rings 25 may be obtained with a plurality of layers 251, 252, ..., 25n-1, 25n in which the first layer 251, comprising the base 26 of the barrier ring 25, may have the maximum nickel concentration and/or the minimum tungsten carbide concentration and the last layer 25n, comprising the stop surface 24 of the barrier ring 25, may have the minimum nickel concentration and/or the maximum tungsten carbide concentration.

In accordance with possible embodiments of the present invention, the plurality of layers with which a decreasing nickel concentration and/or an increasing tungsten carbide concentration is obtained from the first layer comprising the base to the last layer comprising the stop surface may comprise only two layers, that is to say, the layer 251 comprising the base 26 and the last layer 25n comprising the stop surface 24.

In accordance with one embodiment of the present invention the plurality of layers with which a decreasing nickel concentration and/or an increasing tungsten carbide concentration is obtained from the first layer comprising the base to the last layer comprising the stop surface may comprise in addition to the layer comprising the base 26 and the layer comprising the stop surface 24 a single intermediate layer.

According to possible embodiments of this invention, between the first layer 251 and the last layer 25n there may be intermediate layers 252, ...,25n- 1 present.

According to possible embodiments of this invention, in the barrier rings 25 the tungsten carbide concentration of the first layer 251 which comprises the base 26 of the barrier ring 25 may be lower than 10% by weight and/or the nickel concentration may be higher than 85% by weight.

According to possible embodiments of the present invention, in the barrier rings 25 the tungsten carbide concentration of the first layer 251, which comprises base 26, may be 0%.

According to possible embodiments of this invention, in the barrier rings 25 the nickel concentration of the first layer 251, which comprises the base 26, may be higher than 90% by weight.

In accordance with possible embodiments of this invention, in the barrier rings 25 the tungsten carbide concentration of the layer 25n, which comprises the stop surface 24, may be higher than 80% by weight and/or the nickel concentration may be lower than 10% by weight.

According to possible embodiments of this invention, in the barrier rings 25 the tungsten carbide concentration of the last layer 25n, which comprises the stop surface 24, may be higher than 85% by weight.

In accordance with possible embodiments of this invention, in the barrier rings 25 the nickel concentration of the last layer 25n, which comprises the stop surface 24, may be 0%.

In one embodiment of this invention, each layer 251, 252, 253, ..., 25n of powdered material of which the barrier rings 25 of the knife 10 are composed may have a thickness of less than 5 mm.

A further purpose of this invention is to teach how to implement a method for making a rotary knife for cutting web materials which is capable of overcoming the drawbacks of the prior art.

Hereinafter in the description reference will be made to making the blade 15, without limiting the scope of the description since it will also be possible to apply the teachings relative to making the blade 15 for realizing the barrier rings 25.

In accordance with possible embodiments of the present invention, each layer 151, 152, 153, ..., 15n of powdered material of which the blade 15 is composed and each layer 251, 252, 253, ..., 25n of powdered material of which each barrier ring 25 of the knife 10 is composed may be made by means of a plurality of sintered metallic powder beads.

According to possible embodiments of this invention, each layer 251, 252, ..., 25n of powdered material with which the barrier ring 25 of the knife 10 is built may have the same thickness as the corresponding layer 151, 152, ..., 15n with which the blade 15 of the knife 10 is built.

According to possible embodiments of this invention the plurality of sintered metallic powder beads suitable for making the layers of material 151, 152, ..., 15n and 251, 252, ..., 25n may be produced by means of a process of direct deposition of the metallic powders, in which a laser beam 41 emitted by a laser source 60 generates a molten bath, or crucible, 42 on the bushing 11 of the knife which, depending on the power and the scanning speed of the beam, may have plan sizes which may vary from half to five times the diameter d (from 0.5d to 5d) of the focal spot (or focal) of the laser beam 41.

In the molten bath, or crucible, 42 a flow of metal powder is continuously injected which is melted and, subsequently, after the passage of the laser beam 41, is allowed to solidify rapidly thereby achieving a selective sintering of the particles of metallic powder which causes the formation of a very compact sintered metallic powder bead 45. Each sintered metallic powder bead 45 has a height H and a width W.

In accordance with possible embodiments of the present invention the ratio of the height H to the width W of each sintered metallic powder bead 45 may be less than or equal to 1/3 or, in other words, each sintered metallic powder bead 45 may have the width dimension W greater than or equal to 3 times the height dimension H.

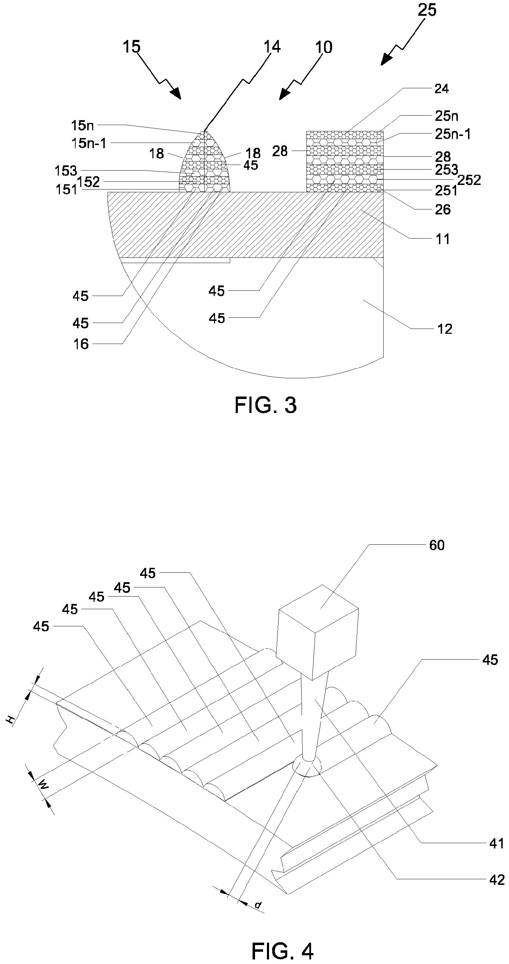

According to possible embodiments of the present invention, as can be seen in Figure 4, the trajectory followed by the laser beam causes the formation of a series of sintered metallic powder beads deposited alongside each other with a predetermined overlapping percentage in such a way as to make a layer of added material.

According to possible embodiments of the present invention, pluralities of sintered metallic powder beads may also mean the case in which the sintered metallic powder beads are in reality the coils of a single sintered metallic powder bead wound around a cylinder (for example the bushing 11), or when the sintered metallic powder beads side by side are in reality the parts of a single sintered metallic powder bead made by following an alternating trajectory forward and backward.

After deposition of the first layer, the deposition head, which includes the nozzle which conveys the powders and the focusing lenses of the laser beam (not illustrated in the figures), moves and begins deposition of the second layer. Therefore, the process is repeated one pass after another, layer after layer, until the part is complete as illustrated in Figure 2 and in Figure 3.

According to possible embodiments of the present invention, the knife 10 may have the shaft 12 made of hardened steel

In accordance with possible embodiments a hardened steel suitable for making the shaft 12 of the knife may be 1.6510 - 39NiCrMo3.

According to possible embodiments of this invention, the bushing 11 may advantageously be made of stainless steel which allows the avoidance of any further surface treatment for the body of the knife against corrosion.

In accordance with possible embodiments of this invention, the blade 15 may advantageously be made by building a plurality of layers 151, 152, 153, ..., 15n by sintering a powdered material in which the first layer 151, comprising the base 16 of the blade 15, may have the maximum nickel concentration and/or the minimum tungsten carbide concentration and the last layer 15n, comprising the crest 14 of the blade 15, may have the minimum nickel concentration and/or the maximum tungsten carbide concentration.

In accordance with possible embodiments of the present invention, the plurality of layers with which a decreasing nickel concentration and/or an increasing tungsten carbide concentration is obtained from the first layer comprising the base to the last layer comprising the crest may be obtained with only two layers, that is to say, the first layer 151 comprising the base 16 and the last layer 15n comprising the crest 14.

In accordance with one embodiment of the present invention the plurality of layers with which a decreasing nickel concentration and/or an increasing tungsten carbide concentration is obtained from the first layer comprising the base to the last layer comprising the crest may comprise in addition to the first layer 151 comprising the base 16 and the last layer 15n comprising the crest 14 a single intermediate layer.

According to possible embodiments of the present invention, between the first layer 151 and the last layer 15n there may be multiple intermediate layers 152, ..., 15n-1 present.

In accordance with possible embodiments of this invention, the last layer 15n, comprising the crest 14 of the blade 15, may be built by sintering a powdered metallic material which has a tungsten carbide percentage higher than 80% by weight suitable for being able to withstand the high mechanical stresses and the abrasive action generated by the cutting process.

In accordance with possible embodiments of the present invention a powdered metallic material suitable for making the last layer 15n which comprises the crest 14 of the blade 15 of the knife 10 may be the powdered metallic material identified with the product code Sintered T311 (WC/Co/Cr) produced and marketed by MBN Nanomateriali S.p.A. That material is a mixture containing: 86% tungsten carbide, 10% cobalt and 4% chromium (the percentages are by weight).

The particle size of the above-mentioned powder is within the range 10 - 49 microns and the granules have a mainly spherical shape.

In order to overcome the disadvantages listed in the prior art and to obtain good levels of adherence it is necessary for the first metallic material with which the bushing 11 of the knife 10 is made and the sintered powdered metallic material of the first layer 151, comprising the base 16, to be provided with a high degree of ductility which allows them to absorb, deforming as they do, the tensions to which they are subjected. Indeed, the materials of the blade 15 and of the bushing 11 are subjected to great shrinkage tensions which are generated when making the sintered metallic powder beads 45 which form the first layer 151, to which are added the stresses that arise due to the fact that materials having inevitable differences in the values of the linear thermal expansion coefficients are put in close contact.

A powdered metallic material suitable for making the first layer of material 151 of the blade 15 may be a powdered nickel alloy identified with the product code Colmonoy 227-F produced and marketed by Wall Colmonoy. That material is a mixture comprising: Boron 0.80%, Carbon 0.03%, Chromium 0.30%, Iron 0.04%, Silicon 2.51%, aluminum 1.97%, Nickel to completion (balance) (the percentages are by weight).

The particle size of the Colmonoy 227-F powder is within the range 45 - 106 microns and they have a mainly spherical shape.

In order to further reduce the differences between the values of the linear thermal expansion coefficients between the material with the maximum tungsten carbide percentage with which the layer 15n is built and which forms the crest 14 of the knife 15, which is 5.5 micron/m°C, and the material with the minimum tungsten carbide concentration with which the first layer 151 is built, which has a thermal expansion coefficient of 13.4 micron/m°C, further intermediate layers of material 152, 153, ...15(n-1) are made each of which has an increasing tungsten carbide percentage and a decreasing nickel alloy percentage, that is to say, in other words it will be possible to build the first layer 151 with a powder having a nickel percentage higher than 85% by weight and/or a tungsten carbide concentration lower than 10% by weight, it will be possible to build the last layer 15n of the crest 14 with a powder having a tungsten carbide concentration higher than 80% by weight and/or a nickel concentration lower than 10% by weight, whilst it will be possible to build the other layers, passing from the base to the crest, by reducing the nickel powder percentage and increasing the tungsten carbide powder percentage, in such a way that the gradual variation of the composition of the materials used to make the intermediate layers 152, 153, ...15(n-1) can create the optimum conditions for the crest 14 of the knife 15, in which there is the maximum concentration of tungsten carbide, reducing the stresses due to the difference between the thermal expansion coefficients to which the material of the last layer 15n of the crest 14 is subjected.

Making a plurality of intermediate layers 152, ...15(n-1), (also known as cushioning layers) having a tungsten carbide concentration increasing from the base to the crest and/or a nickel concentration decreasing from the base to the crest, guarantees adherence between the first layer 151 comprising the base 16 and the first metallic material of the bushing 11 of the knife 10, between the first layer 151 and the subsequent layers 152, 153, ...15(n-1) and finally with the last layer 15n comprising the crest 14, eliminating the risks of microfractures generated by the behaviors due to the different thermal expansion coefficients of the materials of the layers which are adjacent to each other (or in close contact).

In accordance with possible embodiments, the blade 15 may be made with 6 layers of sintered material 151, 152, ...155, 156.

According to possible embodiments of this invention, it is possible to make the layers 151, 152, ...155, 156 which build the blade 15 which have compositions, in terms of percentages by weight, of nickel and of tungsten carbide as indicated below:
- first layer 151, comprising the base 16 of the knife 15, comprising a nickel concentration higher than 93% and a tungsten carbide concentration of 0%;
- second layer 152 comprising a nickel concentration of 56.5% and a tungsten carbide concentration of 34.4%;
- third layer 153 comprising a nickel concentration of 37.7% and a tungsten carbide concentration of 51.6%;
- fourth layer 154 comprising a nickel concentration of 18.9% and a tungsten carbide concentration of 68.8%;
- fifth layer 155 comprising a nickel concentration of 9.4% and a tungsten carbide concentration of 77.4%; and
- sixth layer 156, comprising the crest 14 of the knife 15, comprising a nickel concentration of 0% and a tungsten carbide concentration of 86%.

According to possible embodiments of this invention, each layer 151, 152, 153, ..., 156 of sintered material which builds the blade 15 of the knife 10 may have a thickness of less than 3 mm.

In accordance with possible embodiments of the present invention the layers 151, 152, ...15(n-1), 15n, which build the blade 15 may have thicknesses which are the same as each other.

A further purpose of the present invention is to teach how to implement a method for restoring the external diameter of a worn blade 15 of a rotary knife for cutting web materials made either according to the teachings of this invention or according to the prior art.

According to possible embodiments of this invention, it is possible to make sintered metallic powder beads 45 for rebuilding at least the last layer 15n of the blade 15 comprising the crest 14.

In this case too, the sintered metallic powder beads 45 may be produced by means of a process of direct deposition of the metallic powders, in which a laser beam 41 emitted by a laser source 60 generates a molten bath, or crucible, 42 on the top of the worn blade which, depending on the power and the scanning speed of the beam, may have plan sizes which may vary from half to five times the diameter d (from 0.5d to 5d) of the focal spot (or focal) of the laser beam 41.

In the molten bath, or crucible, 42 a flow of metal powder is continuously injected which may be the powder with which the crest 14 of the blade 15 has been made, or, in the case of knives made with traditional technologies the powder with which the blade 15 has been made.

The metal powder is melted and, subsequently, after the passage of the laser beam 41, can solidify rapidly, thereby achieving a selective sintering of the particles of metallic powder which causes the formation of a very compact sintered metallic powder bead 45.

After deposition of the first sintered metallic powder bead 45, the deposition head, which includes the nozzle which conveys the powders and the focusing lenses of the laser beam (not illustrated in the figures), shifts and begins deposition of a second sintered metallic powder bead 45 if necessary, until the external diameter of the blade has been restored, allowing resharpening of the crest 14 of the blade

Each sintered metallic powder bead 45 has a height H and a width W.

In accordance with possible embodiments of this invention the ratio of the height H to the width W of each sintered metallic powder bead 45 may be less than or equal to 1/3 or, in other words, each sintered metallic powder bead 45 may have the width dimension W greater than or equal to 3 times the height dimension H.

According to possible embodiments of the present invention, the trajectory followed by the beam may cause the formation of a series of sintered metallic powder beads deposited alongside each other with a predetermined overlapping percentage in such a way as to make a layer of material suitable for restoring the external diameter of the blade 15.

It is clear that the rotary knife 10 and the related production method described above can be modified and/or have parts added, without thereby departing from the scope of this invention.

It is also clear that, although the present invention has been described with reference to some specific examples, a person skilled in the art will certainly be able to make many other equivalent forms of the rotary knife 10 and of the related production method comprising at least one blade 15 having the characteristics set forth in the claims and therefore all falling within the scope of protection defined therein.

In the following claims, the sole purpose of the references in brackets is to facilitate the reading and they should not be considered as limiting factors regarding.

## Claims

1. Rotary knife (10) for cutting web materials comprising a body (11) of a first metallic material and at least a blade (15) of a second metallic material having a base (16) and a crest (14), wherein said second metallic material is a powdered material and wherein said blade (15) comprises a plurality of layers (151, 152,...,15 (n-1), 15n) in which it is possible to identify a first layer (151) comprising the base (16) of the blade (15) and a last layer (15n) comprising the crest (14) of said blade (15) and wherein each layer (151, 152, ..., 15(n-1), 15n) of said plurality of layers (151, 152, ..., 15(n-1), 15n) has a tungsten carbide concentration increasing from the first layer (151) to the last layer (15n) and/or a nickel concentration decreasing from the first layer (151) to the last layer (15n) of said blade (15).

2. Rotary knife (10) as in claim 1, **characterized in that** said first layer (151) of said blade (15) comprises a tungsten carbide concentration lower than 10% by weight and/or a nickel concentration higher than 85% by weight.

3. Rotary knife (10) as in claim 1 or claim 2, **characterized in that** said last layer (15n) of said blade (15) comprises a concentration of tungsten carbide higher than 80% by weight and/or a nickel concentration lower than 10% by weight.

4. Rotary knife (10) as in any of the preceding claims, **characterized in that** each layer of said plurality of layers (151, 152, ..., 15(n-1), 15n) has a thickness of less than 5 mm.

5. Method for making a rotary knife (10) for cutting web materials comprising a body (11) of a first metallic material and at least a blade (15) of a second metallic material having a base (16) and a crest (14), wherein said second metallic material is a powder material, said method comprising the steps of:
- supplying said body (11) of said knife 10;
- generating a molten metal crucible (42) on said body (11) of said knife (10);
- feeding the powder of said second metallic material;
- melting the powder of said second metallic material in said molten metal crucible (42); and
- solidifying said second metal material in order to make a plurality of sintered metal powder beads (45) for making a plurality of layers (151, 152, ..., 15(n-1), 15n) in order to build said blade (15) of said knife (10), wherein it is possible to identify a first layer (151) comprising the base (16) of the blade (15) and a last layer (15n) comprising the crest (14) of the blade (15).

6. Method for making a rotary knife (10) as in claim 5, **characterized in that** said plurality of layers (151, 152,..., 15(n-1), 15n) of said blade (15) has a tungsten carbide concentration increasing from the first layer (151) to the last layer (15n) and/or a nickel concentration decreasing from the first layer (151) to the last layer (15n) of said blade (15).

7. Method for making a rotary knife (10) as in claim 5 or claim 6, **characterized by** making said molten metal crucible (42) by means of a laser beam (41) having a focal diameter (d).

8. Method for making a rotary knife (10) as in claim 7, **characterized in that** said molten metal crucible (42) has a plan size comprised between 0.5 and 5 times the focal diameter (d) of said laser beam (41).

9. Method for making a rotary knife (10) as in any of the preceding claims, **characterized in that** the powder of said second metallic material has a particle size between 10 and 120 microns.

10. Method for making a rotary knife (10) as in any of the preceding claims, **characterized in that** each bead of said sintered metal powder beads (45) for making the layers of said plurality of layers (151, 152, ... , 15 (n-1) 15n) has a height (H) and a width (W) wherein the width (W) is greater than or equal to 3 times the height (H).
